Europäisches Patentamt

European Patent Office

Office européen des brevets

(19)

(11) Veröffentlichungsnummer: **0 325 285**
**A2**

(12) **EUROPÄISCHE PATENTANMELDUNG**

(21) Anmeldenummer: 89100994.6

(22) Anmeldetag: 20.01.89

(51) Int. Cl.⁴: **G06K 1/12**

(30) Priorität: 22.01.88 DE 3801861

(43) Veröffentlichungstag der Anmeldung:
26.07.89 Patentblatt 89/30

(84) Benannte Vertragsstaaten:
**AT CH DE ES FR GB IT LI NL SE**

(71) Anmelder: **LOEWE DRUCK & VERLAG GMBH**
**Industriestrasse 33**
**D-4800 Bielefeld 1(DE)**

(72) Erfinder: **Bernauer, Joachim**
**Gut Menkhausen**
**D-4811 Oerlinghausen(DE)**

(74) Vertreter: **Patentanwälte TER MEER - MÜLLER**
**- STEINMEISTER**
**Artur-Ladebeck-Strasse 51**
**D-4800 Bielefeld 1(DE)**

(54) **Verfahren und Vorrichtung zum fortlaufenden Drucken des Strichcodes 2/5 Interleaved.**

(57) Ein Verfahren zum fortlaufenden Drucken des Strich-Codes 2/5 interleaved sieht vor, daß das Druckverhältnis schmaler Strich/breiter Strich auf 2:1 festgelegt wird. Das Code-Feld (10) wird in schmale Strichflächen unterteilt, und diese werden jeweils alternierend zwei verschiedenen Druckwerken zugeordnet. Die Druckwerke weisen in den ihnen zugeordneten Strichflächen verstellbare Druckformen in allen Strich-Kombinationen auf. Der Code wird durch die beiden Druckwerke nacheinander passergenau gedruckt.

**FIG.1**

EP 0 325 285 A2

# VERFAHREN UND VORRICHTUNG ZUM FORTLAUFENDEN DRUCKEN DES STRICHCODES 2/5 INTERLEAVED

Die Erfindung betrifft ein Verfahren zum fortlaufenden Drucken des Strich-Codes 2/5 interleaved sowie eine Vorrichtung zur Durchführung des Verfahrens.

Strich-Codes oder Bar-Codes werden in zunehmendem Maße zum maschinenlesbaren Kennzeichnen von Waren verwendet. Es existieren unterschiedliche Codes, von denen der sogenannte 2/5 interleaved den Vorteil einer hohen Informationsdichte bietet, da er nicht nur die Anordnung und Stärke der Striche oder Balken, sondern auch diejenige der Zwischenräume oder Lücken als Informationsträger verwendet.

Bei den meisten numerischen oder alphanumerischen Codes werden die einzelnen Ziffern oder Buchstaben durch eine geschlossene Gruppe von Strichen codiert, denen dann eine weitere Gruppe für die nächste Ziffer oder den nächsten Buchstaben folgt. Beim durchlaufenden Codieren, also etwa beim Durchnumerieren einer Artikelserie von 01 bis 99, kann daher ein im Prinzip übliches Zählwerk verwendet werden, bei dem die Einer, sodann die Zehner und ggf. die Hunderter schrittweise bei jedem Druckvorgang verstellt werden.

Die hohe Informationsdichte des Codes 2/5 interleave (überlappt) beruht im wesentlichen darauf, daß jeweils zwei Ziffern durch eine geschlossene Gruppe von Strichen codiert werden, von denen die erste durch die Stärke und Anordnung der Striche und die zweite durch die Stärke und Anordnung der Lücken wiedergegeben wird. Mit einem üblichen mechanischen Zählwerk ist ein durchlaufendes Drucken daher nicht möglich, da eine schrittweise Änderung der Stärke und Anordnung der Balken oder Striche zugleich Stärke und Anordnung der zwischen diesen enhaltenen Lücken verändert, beide in einer Strichgruppe enthaltenen Ziffern also eine ineinander verzahnte Einheit bilden. Beim durchlaufenden Drucken der Ziffern 01 bis 99 wäre daher theoretisch ein Typenrad mit 99 verschiedenen Code-Bildern erforderlich.

Zwar ist es ohne weiteres möglich, die verschiedenen Code-Bilder in einer Datenverarbeitungsanlage zu speichern und mit Hilfe eines Laser-Druckers oder dergleichen auszudrucken, jedoch erreichen Drucker dieser Art nur ca. 1000 Drucke pro Stunde, während bei einem durchlaufenden Drucken mit einem mechanischen Druckwerk wenigstens 30000 Druckvorgänge pro Stunde möglich sind.

Der Erfindung liegt daher die Aufgabe zugrunde, ein Verfahren und eine Vorrichtung zu schaffen, die es ermöglichen, den 2/5 interleaved-Code mit einem mechanischen Druckwerk bei begrenztem konstruktivem Aufwand numerisch durchlaufend zu drucken.

Diese Aufgabe wird erfindungsgemäß bei einem Verfahren der eingangs genannten Art gelöst, das dadurch gekennzeichnet ist, daß das Druckverhältnis schmaler Strich/breiter Strich auf 2:1 festgelegt wird, daß das Code-Feld in schmale Strichflächen unterteilt wird und diese jeweils alternierend zwei verschiedenen Druckwerken zugeordnet werden, daß die Druckwerke in den ihnen zugeordneten Strichflächen verstellbare Druckformen in allen Strich-Kombinationen aufweisen und daß der Code durch die beiden Druckwerke nacheinander passergenau gedruckt wird.

Bei dem hier behandelten Code kann das sogenannte Druckverhältnis, also das Verhältnis der Breite der schmalen Striche oder Lücken zu den breiten Strichen 1:2 oder 1:3 betragen. Bei dem erfindungsgemäßen Verfahren ist das Druckverhältnis 1:2 vorgesehen.

Das für die Wiedergabe von zwei Ziffern benötigte Code-Feld läßt sich - abgesehen von dem am Anfang immer vorhandenen Strich und der am Ende stets vorgesehenen Lücke - in 12 Flächen mit der Breite eines schmalen Strichs oder einer schmalen Lücke aufteilen. Diese 12 Felder werden jeweils abwechselnd einem der beiden Druckwerke zugeordnet, so daß also jedes maximal 6 schmale Striche oder Balken, ggf. aber auch eine geringere Zahl von Strichen drucken kann. Dies würde theoretisch für jede mögliche Kombination der Striche zwei Druckwerke mit jeweils $2^6$ oder 64 nacheinander einstellbaren Druckbildern erforderlich machen. Vorzugsweise werden die beiden Typenräder daher noch einmal in der Mitte geteilt, so daß sie maximal jeweils drei Strich-Bilder tragen und die erforderlichen Kombinationen oder Stellungen der Typenräder $2^3$ oder 8 betragen.

In den Lücken der Typenräder, die für den Druck nicht benötigt werden, können jeweils Greiferfedern für die einzelnen Raststellungen oder dergleichen vorgesehen werden.

Der Druck erfolgt vorzugsweise mit Hilfe eines sogenannten Satellit-Drucksystems, bei dem mehrere Druckwerke einem gemeinsamen Gegendruckzylinder zugeordnet sind, so daß das zu bedruckende Material genau und zuverlässig geführt wird und ein passergenauer Druck entsteht.

Die Striche oder Balken werden im Druckbild vorzugsweise zu einer Seite, also nach rechts oder links um ca. 10% dicker ausgeführt, als es der Norm entspricht. Diese Verstärkung beeinträchtigt die Lesbarkeit nicht und hat zur Folge, daß zwei nebeneinander liegende Striche stets als geschlossener breiter Strich erscheinen, und zwar auch dann, wenn mit etwas größeren Drucktoleranzen beim Zusammenwirken der beiden Druckwerke zu rechnen ist.

Bei Verwendung eines Satellit-Drucksystems können beide Druckwerke durch das selbe Farbwerk eingefärbt werden, so daß die Striche beider Druckwerke in der selben Farbintensität erscheinen und nebeneinander liegende schmale Striche wie ein zusammenhängender breiter Strich wirken.

Im folgenden werden bevorzugte Ausführungsbeispiele der Erfindung anhand der beigefügten Zeichnung näher erläutert.

Fig. 1 ist eine vergrößerte Darstellung eines als Beispiel zu verstehenden Drucks eines 2/5 interleaved-Codes mit zur Verdeutlichung versetztem Druck der beiden Druckwerke;

Fig. 2 ist eine weiter vergrößerte Darstellung des Code-Feldes für zwei ineinander verschachtelte Ziffern;

Fig. 3 ist eine schematische Darstellung eines Satellit-Druckwerks zur Durchführung der Erfindung.

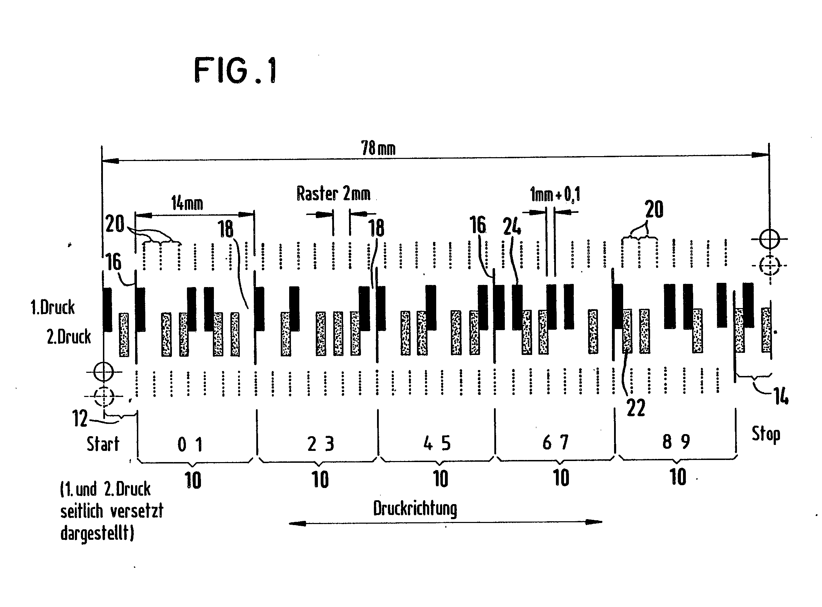

In Figur 1 sind die jeweils zur Darstellung von zwei Ziffern benötigten Code-Felder durch geschweifte Klammern zusammengefaßt und mit 10 bezeichnet. Die durch die beiden Druckwerke gedruckten Balken oder Striche sind zur Verdeutlichung versetzt dargestellt, liegen jedoch in der Praxis nebeneinander und weisen im übrigen die gleiche Farbintensität auf. Der in Figur 1 gezeigte Code enthält 5 Code-Felder 10 und gestattet somit die Wiedergabe einer zehnstelligen Zahl.

Am Beginn eines Codes ist ein Start-Code 12 und am Schluß ein Stop-Code 14 vorgesehen, die beim mechanischen Ablesen anzeigen, in welcher Richtung die Ziffern zu lesen sind. Der Start- und der Stop-Code sind stets gleich, so daß die insoweit benötigten Striche fest in den beiden Druckwerken vorgesehen werden können.

Am links in Figur 1 liegenden Beginn jedes Code-Feldes ist jeweils ein schmaler Strich 16 vorgesehen, so daß auch dieser Strich fest in eines der beiden Druckwerke eingebaut werden kann. Am Schluß befindet sich stets eine schmale Lücke 18, die ebenfalls stets freibleibt. Zwischen dem Strich 16 und der Lücke 18 befinden sich sechs Felder 20, die durch punktierte Linien getrennt sind und die Breite eines breiten Striches oder zweier schmaler Striche aufweisen, insgesamt also 12 schmale Strichflächen oder Lückenflächen ergeben. Im dargestellten Beispiel ist jeweils die erste Hälfte der Felder 20 dem in Figur 1 nach unten versetzt druckenden zweiten Druckwerk zugeordnet, wie etwa der Strich 22 erkennen läßt,und die zweite Hälfte dem ersten Druckwerk, wie der Strich 24 zeigt. Diese abwechselnde Reihenfolge setzt sich über alle sechs Felder 20 fort.

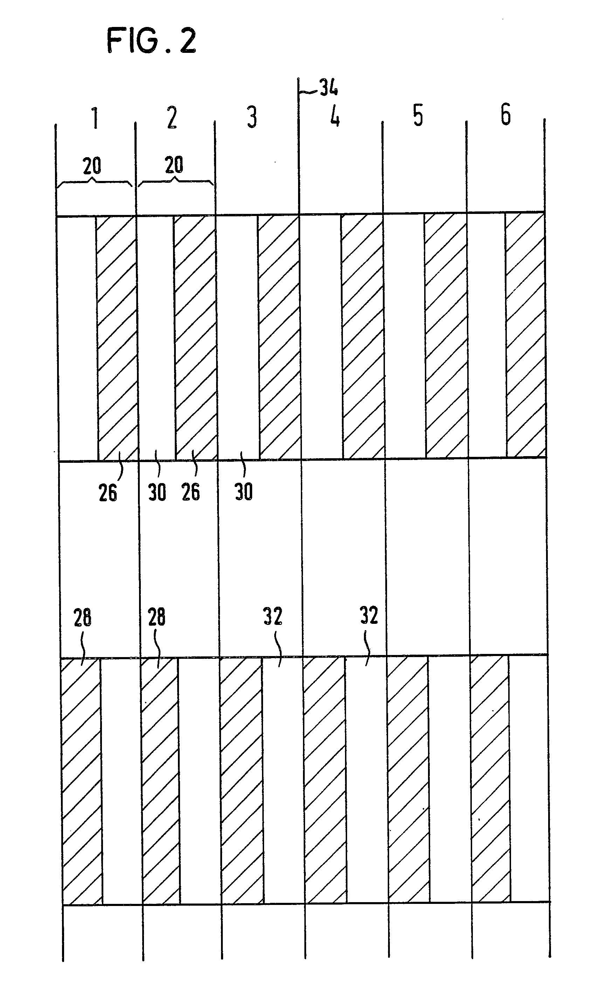

In Figur 2 sind die sechs Felder 20 eines für zwei Ziffern vorgesehenen Code-Feldes 10 in weiterer Vergrößerung und für die beiden Druckwerke auseinandergezogen dargestellt. Im oberen Bereich sind in Figur 2 die dem ersten Druckwerk zugeordnete Strichflächen 26 der Felder 20 und im unteren Bereich die Strichflächen 28 des zweiten Druckwerkes schraffiert dargestellt. Diese Strichflächen können insgesamt oder in einer beliebigen Unterkombination durch die beiden Druckwerke gedruckt werden. Andererseits bleiben die Lücken-Flächen 30,32 bei beiden Druckwerken stets frei, so daß hier Rastfedern oder dergleichen untergebracht werden können.

Zur Verringerung der Zahl der möglichen Strich-Kombinationen auf den beiden Druckwerken ist es zweckmäßig, diese in Längsrichtung entlang der Linie 34 zu teilen, so daß für jedes Teil-Druckwerk lediglich drei Striche und deren Unterkombinationen, insgesamt also acht Strichkombinationen verbleiben, die ein Zählwerk mit nur acht Stellpositionen erfordern.

Erfindungsgemäß können die beiden Druckwerke weitgehend gleich ausgebildet sein, da der einzige Unterschied darin besteht, daß die Strich-Positionen um die halbe Breite eines Feldes 20 versetzt sind. Der konstruktive Mehraufwand für die Herstellung eines zweiten Druckwerks kann daher in Grenzen gehalten werden.

Dieser Vorteil bietet sich nicht bei einer denkbaren Abwandlung der Erfindung, bei der alle dünnen Striche durch ein erstes und alle dicken Striche durch ein zweites Druckwerk gedruckt werden. In diesem Falle benötigt das erste Druckwerk ein Zählwerk mit acht Stellungen und das zweite ein Zählwerk mit zwölf Stellungen, und die Zählwerke müssen folglich insgesamt sehr unterschiedlich ausgeführt sein.

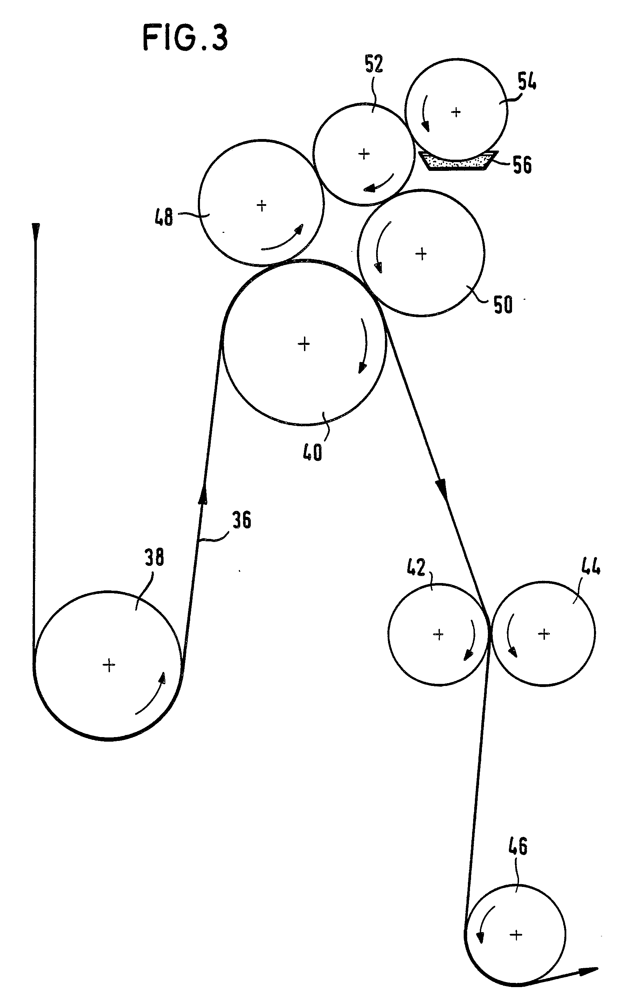

Figur 3 zeigt schematisch ein erfindungsgemäßes Drucksystem, bei dem eine Materialbahn über eine Umlenkrolle 38 und eine Gegendruckwalze 40 und sodann zwischen zwei Transportrollen 42,44 hindurch und eine weitere Umlenkrolle 46 geführt wird. Der Gegendruckwalze 40 sind erste und zweite Druckwalzen 48,50 mit den erfindungsgemäßen Numerier- oder Zählwerken zugeordnet. Beide Druckwalzen 48,50 werden durch eine gemeinsame Farbauftragswalze 52 eingefärbt, die über eine Zwischenwalze 54 Druckfarbe aus einem Bad 56 aufnimmt. Da beide Druckwalzen 48,50 durch ein und dasselbe Farbwerk 52,54,56 eingefärbt werden, erscheint der Druck der Striche beider Druckwerke stets in gleicher Intensität.

## Ansprüche

1. Verfahren zum fortlaufenden Drucken des Strich-Codes 2/5 interleaved, dadurch **gekennzeichnet**, daß das Druckverhältnis schmaler Strich/breiter Strich auf 2:1 festgelegt wird, daß das Code-Feld (10) in schmale Strich-Flächen (26,28,30,32) unterteilt wird und diese jeweils alternatierend zwei verschiedenen Druckwerke (48, 50) zugeordnet werden, daß die Druckwerke in den ihnen zugeordneten Strichflächen verstellbare Druckformen in allen Strich-Kombinationen aufweisen und daß der Code durch die beiden Druckwerke nacheinander passergenau gedruckt wird.

2. Verfahren nach Anspruch 1, dadurch **gekennzeichnet**, daß die Strich-Bilder in oder gegen Druckrichtung um etwa 10% verbreitert sind.

3. Verfahren nach Anspruch 1 oder 2, dadurch **gekennzeichnet**, daß der Druck mit Hilfe eines Satellit-Drucksystems erfolgt, dem beide Druckwerke (48,50) zugeordnet sind.

4. Verfahren nach einem der Ansprüche 1 bis 3, dadurch **gekennzeichnet**, daß die Striche eines Start- und Stop-Codes (12,14), sowie ein erster schmaler Strich (16) am Beginn jedes Code-Feldes (20) fest in einem der beiden Druckwerke (48,50) angebracht sind.

5. Vorrichtung zur Durchführung eines der Ansprüche 1 bis 4, **gekennzeichnet** durch zwei Druckwerke (48,50), die jeweils in alternierenden schmalen Strichflächen eines Codefeldes und in allen Unterkombinationen dieser alternierenden Strichfläche Druckbilder für schmale Strichflächen aufweisen.

6. Vorrichtung nach Anspruch 5, dadurch **gekennzeichnet**, daß die Numerierwerke der beiden Druckwerke (48,50) in Längsrichtung in der Mitte geteilt sind, daß jedes Teil-Numerierwerk Strich-Druckbilder in drei alternierenden schmalen Strichflächen und deren Unterkombinationen aufweist.

FIG.1

EP 0 325 285 A2

# FIG. 2

# FIG.3